# EUROPEAN PATENT SPECIFICATION

(11) **EP 3 169 271 B1**
(45) Date of publication and mention of the grant of the patent: **25.09.2019**
(21) Application number: 15747556.7
(22) Date of filing: 09.07.2015
(51) Int. Cl.: A61C 15/04

(54) **ORAL CARE TOOL FOR TENSIONED DENTAL FLOSS**
MUNDPFLEGEWERKZEUG FÜR GESPANNTE ZAHNSEIDE
OUTIL DE SOINS BUCCO-DENTAIRES POUR FIL DENTAIRE TENDU

(30) Priority: 16.07.2014 IT PD20140190
(43) Date of publication of application: 24.05.2017
(73) Proprietor: Mypro Research S.r.l., 36016 Thiene (VI) (IT); Brun, Giancarlo, 36016 Thiene (VI) (IT)
(72) Inventor: BRUN, Giancarlo, I-36016 Thiene (VI) (IT)
(74) Representative: Contadin, Giorgio
(86) International application number: PCT/IB2015/055202
(87) International publication number: WO 2016/009313

(56) References cited:
- WO-A1-94/22391
- US-A- 3 789 859
- US-A- 4 901 742
- US-A- 5 188 133
- US-A- 5 269 331
- US-A- 6 092 536
- US-A1- 2011 203 609
- US-A1- 2014 166 042

## Description

The present invention concerns an oral care tool for tensioned dental floss (otherwise also called dental thread-stretcher fork or support for tensioned dental floss or even actionable device for tensioned dental floss) having a simplified construction compared to equivalent tools of known type.

The oral care tool of the invention allows to distribute outside hygienic and sterilized dental floss, initially contained into a housing chamber of box-shaped casing (or hollow handle portion) in the shape of coil, in such a way that the section of dental floss which must be from time to time used by the person is perfectly tensioned and it can thus penetrate correctly, effectively, safely and quickly into the interstitial cavity between two teeth.

As known, normally, the dental floss for oral care and hygiene of a person is available in small plastic containers containing a roll of tape neatly wound on itself having a length typically variable from 10 to 50 meters.

Each container for dental floss is equipped with a small sharp blade placed at one end, essential for the user to rapidly and easily cut dental floss pieces of the desired length.

As an alternative to common and simple "ball" (or spool), the dental floss is currently available combined with tools, equipment or devices that are in the shape of thread-stretcher fork, floss threader, bottle brush, vibrating instrument, gingival stimulator and wood wedge. In particular, for what concerns the present invention, a dental thread-stretcher fork of known type is a special tool made of plastic material suitable for use, typically having a Y (or bow) shape and extremely comfortable and easy to grip and use for a person.

Dental floss, usually already cut and ready to be used or in spool properly housed or supported in hygienic conditions, is mounted placed in tension horizontally on the two arms of the bow forking from the handle accessible to the user.

There are different embodiments of dental thread-stretcher fork, some of which are of disposable type: after having used the dental floss on all the teeth, these forks are thrown in the trash; other variants of dental thread-stretcher forks comprise, instead, an ergonomic reusable wand made of plastic, variously shaped and as long as the handle of a traditional toothbrush, which is provided at one end with an interchangeable head that supports the tensioned dental floss: after one application/use, therefore, such a head is removed and replaced by another one provided with a new dental floss. In this regard, compare the patent document published under WO02/24105 A1.

The Y-shaped thread-stretcher fork is particularly suitable to allow the person to reach difficult areas of his mouth and to clean tight interdental spaces; this tool for the oral cleaning particularly facilitates the use of dental floss in the handicapped or patients with limited manual ability.

From a constructive point of view, an oral care tool for tensioned dental floss of the type herein considered essentially and generally includes a hollow handle portion available to the user in which a housing chamber is define which houses a dental floss spool.

The hollow handle portion also presents an outlet port, typically a through hole, which allows the progressive release of the dental floss under the action of traction exerted from time to time by the user, when he uses a given linear stretch thereof.

In addition, a common oral care tool for tensioned dental floss of the prior art comprises a fork consisting of a couple of shaped arms projecting upwardly from the handle portion, provided with respective terminal tips spaced apart each other by a prefixed distance (or gap) and adapted to support a first progressive given length of dental floss kept under tension, placing it exactly in the prefixed distance that separates the aforesaid terminal tips. An oral care tool for tensioned dental floss of known type then includes guide means, arranged in the upper outer wall of the terminal tips of the shaped arms and which receive a second progressive given length of dental floss: incidentally, the second given progressive length of the dental floss precedes and follows the first given progressive length of the tensioned dental floss in the prefixed distance.

Finally, a known oral care tool for tensioned dental floss comprises, in its essential basis, tensioning means, associated externally with the handle portion and/or fork, suitable to allow the user to tension on at least the first given length of dental floss which remains outside the handle portion in order to favour effective and correct insertion thereof between two adjacent teeth of his own mouth.

Such a construction type of oral care tool for tensioned dental floss is described for example in the prior art patent documents US5,188,133 A, US6,363,949 B1, US7,156,110 B2 and WO94/22391 A1, as well as the prior document published as US3,789,859 A which discloses an oral care tools for dental floss according the preamble and pre-characterizing part of the appended claim 1.

The wide range of oral care tools for tensioned dental floss, diversified not only on the basis of aesthetic shapes but on the construction concept of the essential components mentioned above, allow to meet the needs of a large custom, favouring the expansion of the use of the dental floss that, as known, ensures a better cleaning of the teeth of a person.

However, despite this, oral care tools necessarily intended to support tensioned dental floss present some recognized drawbacks.

The main drawback of the known oral care tools for tensioned dental floss comes from their excessive construction complexity, which can be well seen for example in the patent documents of the known art mentioned above and mainly determined by the fact that the various component members are pieces distinct each other and, therefore, assembled together to create the finished tool.

Times and costs of production of a certain relief inevitably accompany to this situation which, in turn, reflect in high prices of sale to the public of the tools concerned.

A second drawback of the oral care tools for tensioned dental floss of the known technique is due to the fact that such an excessive construction complexity and the consequent excessive production costs and sale prices on the market seem extremely unjustified at the light of the fact that it is mostly about devices of disposable type which are intended to waste and disposed once the spool (or tape or ball) of dental floss contained into the housing chamber of the handle portion has been exhausted, unless to modify the structure of the tool in an intrusive, laborious and expensive way which could also irreparably compromise its integrity.

Another drawback of the oral care tools for tensioned dental floss of known type resides in the fact that they are not very functional and practical to be used at the point of making their circulation not so high compared with the expectations.

A further drawback of the oral care tools for tensioned dental floss of the prior art is constituted by the fact that the portion of dental floss which is placed in the prefixed distance (or gap) defined between the two terminal tips of the shaped arms of the fork is never tensioned in the optimal manner, so that at present the effective and practical use of the tool concerned is often difficult if not impossible to get to the point of totally discouraging the person in carrying it out with constancy.

A last but not least drawback of the existing oral care tools for tensioned dental floss is due to their constructive shapes which make it impractical to be uses inside the mouth of the person, thereby preventing the latter to easily reach and/or effectively clean with the dental floss all the interstitial spaces between tooth and tooth.

Starting, therefore, from the knowledge of the foregoing main drawbacks of the prior art, the present invention intends to fully remedy to them.

In particular, main purpose of the present invention is to provide an oral care tool for tensioned dental floss which presents a construction simpler, less complicated and less laborious to be obtained than that one of equivalent tools of known type.

Within this purpose, a consequent task of the invention is to devise an oral care tool for tensioned dental floss which presents production cost and sale price to the public lower than those ones of similar tools of the prior art, manpower and raw materials being equal.

A second purpose of the present invention is to provide an oral care tool for tensioned dental floss whose simplification in design, manufacture and assembly justifies the disposable use (otherwise known as use of the type "use-and-throw-away", wherein the term "disposable" has to be understood not as single use of the dental floss only once, but single use of the oral care tool until exhaustion of the spool of dental floss contained into the housing chamber of the handle portion), resulting in a minimum waste of material and in any case greatly reduced compared to that one associated with similar tools of the prior art when, after use, they must be disposed because they are not longer adequate or conveniently adaptable to the purpose.

It is a further purpose of the invention to make available an oral care tool for tensioned dental floss which is more functional and more practical to be uses than the known tools comparable to it, to such an extent to favour a greater circulation before the end customers of these very useful tools for the oral care of a person.

It is another purpose of the present invention to create an oral care tool for tensioned dental floss which compared to the known art increases the degree of tensioning of the length of dental floss gradually intended to be used by the person for the care and hygiene of her own teeth - as already said, contained into the prefixed distance defined between the two terminal tips of the shaped arms of the fork -.

It is a last but not least purpose of the invention to develop an oral care tool for tensioned dental floss which is more practical to be uses compared to similar oral care tools of the prior art, allowing to reach with effectiveness and easiness any interstitial point between two adjacent teeth of a person's mouth.

Said purposes are achieved by an oral care tool for tensioned dental floss (or dental thread-stretcher fork or support for tensioned dental floss or actionable device for tensioned dental floss) according to claim 1 attached hereto, as hereinafter referred for the sake exposure brevity.

Other technical and constructive features of detail of the oral care tool for tensioned dental floss are contained in the corresponding dependent claims.

The above-mentioned claims, hereinafter specifically and concretely defined, are considered integral part of the present description.

Advantageously, the oral care tool for tensioned dental floss of invention presents a constructive conception simpler and less complicated than that one of equivalent tools of known type, which reflects in production times and costs of the tool of the invention lower than those ones of the latter, manpower and raw materials used costs being equal.

This is due to the fact that, in the oral care tool of the invention, the handle portion, the fork, the guide means and the tensioning means are made in one piece and monolithic each other forming a single reinforced structural body obtained directly during the production phase by molding, for example by injection of plastic material, and having an at least partially box-shaped structure in a part defining the hollow handle portion itself.

Still advantageously, the oral care tool for tensioned dental floss of the present invention, thanks to its simplified construction widely justifies its use as "use-and-throw-away" device, since the integration of the various essential components listed above in a single piece obtained directly from the production process allows to believe the material waste minimum or at least much lower than that one associated with similar tools of the prior art when its disposal after use must be performed.

Equally advantageously, the oral care tool for tensioned dental floss of the invention is more functional, more practical and more convenient to be uses compared to similar tools of known type, to the point that the applicant of the present invention strongly considers that it will promote a wider spread before the users of this particular type of tools for personal use, with the obvious induced advantages that this entails for the oral care of a greater number of people.

In advantageous manner, moreover, the oral care tool for tensioned dental floss of the current invention is able to allow the user to tension with greater efficiency compared to prior art the length of dental floss gradually intended to be used for the care and hygiene of his own teeth - arranged in the prefixed distance defined between the two terminal tips of the shaped arms of the fork -: the tension of such a length of dental floss progressively used by the user is thus improved by the tool of the invention with respect to the tools of the prior art.

Equally advantageously, the oral care tool for tensioned dental floss of the invention, thanks to the monolithic development of at least its essential components, is more reliable than the comparable prior art tools: this is ensured by the reduction compared to the current state of the art of the number of components mutually assembled together, constructive aspect which notoriously is a source of mechanical risks.

This favours the use of the oral care tool for tensioned dental floss of the present invention once or more times, i.e. with various progressive spools of dental floss which replace the previous one just exhausted by the user, thus making it *de facto* a tool of interchangeable type but without this being at the expense of the conditions of hygiene and sterilization in which the spool itself is kept within the housing chamber defined in the handle portion.

The purposes and advantages described above, as well as others that will emerge hereinafter, will appear to a greater extent from the detailed description which follows, relating to preferred embodiments of the oral care tool for tensioned dental floss of the invention, given by indicative and illustrative, but not limitative, way with reference to the accompanying drawing sheets in which:
- figure 1 is an assonometric view of the oral care tool for tensioned dental floss of the invention;
- figure 2 is a plan view from the bottom of figure 1;
- figure 3 is a front view of figure 1;
- figure 4 is a first side view of figure 1;
- figure 5 is the view of figure 4 along the cutting plane V-V;
- figure 6 is a second side view of figure 1;
- figure 7 is the view of figure 6 along the cutting plane VII-VII;
- figures 8 and 9 are two different and schematic assonometric views of the oral care tool for tensioned dental floss of figure 1 during the assembly stage;
- figure 10 is a side view of figures 8 and 9;
- figures 11 and 12 are two different assonometric views of a first embodiment of the oral care tool for tensioned dental floss of figure 1;
- figures 13 and 14 are two different assonometric views of a constructive detail of figures 11 and 12;
- figure 15 is an assonometric view of a second embodiment of the oral care tool for tensioned dental floss of figure 1;
- figure 16 is the front view of figure 15;
- figure 17 is the view of figure 16 along the cutting plane XVIII-XVIII.

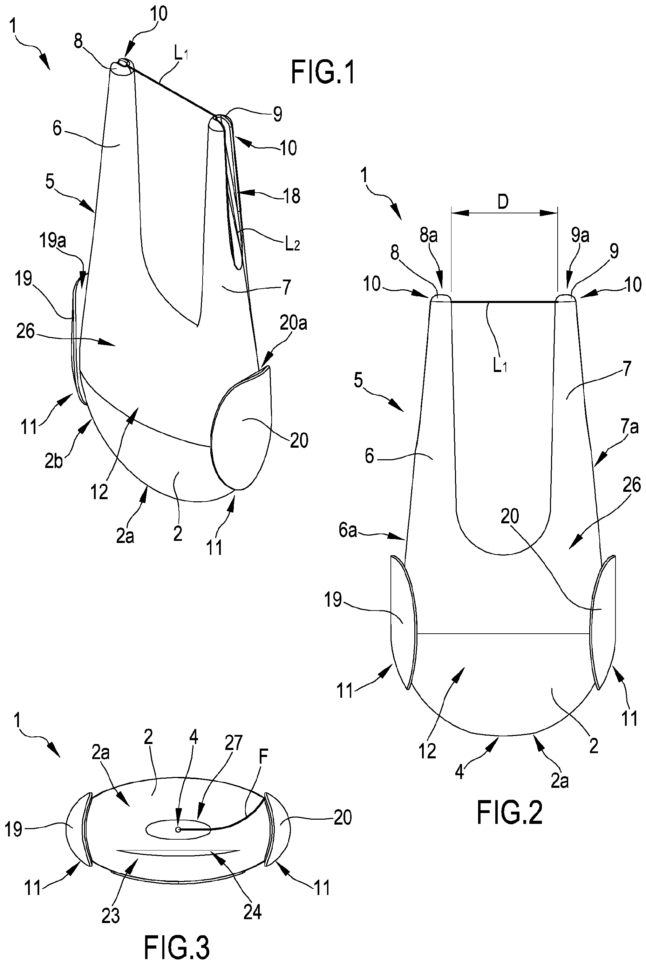

The oral care tool for tensioned dental floss of the invention is shown in figures 1-7, where it is globally numbered with 1, already including a dental floss F properly mounted on it.

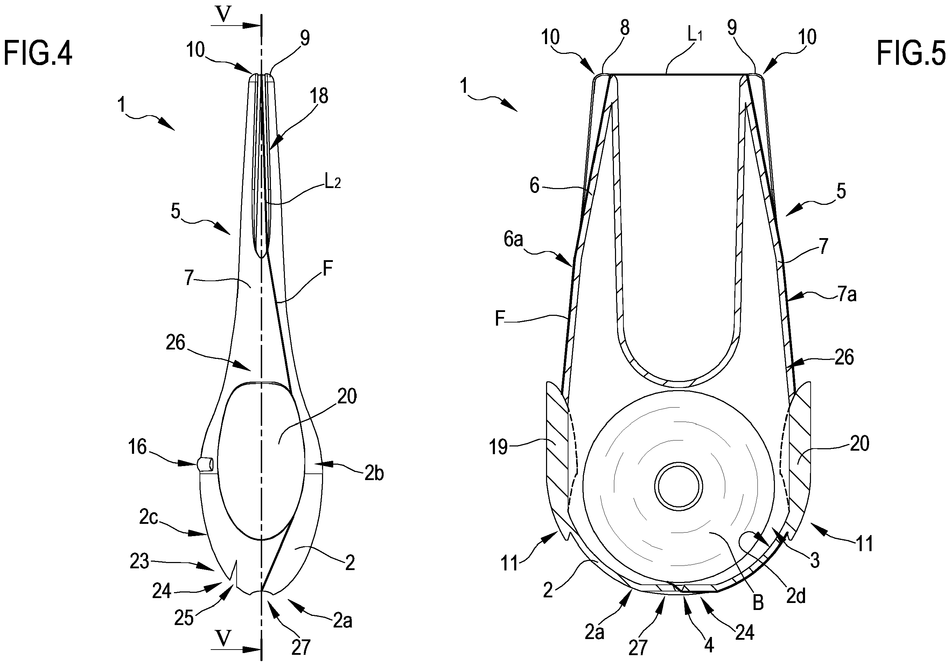

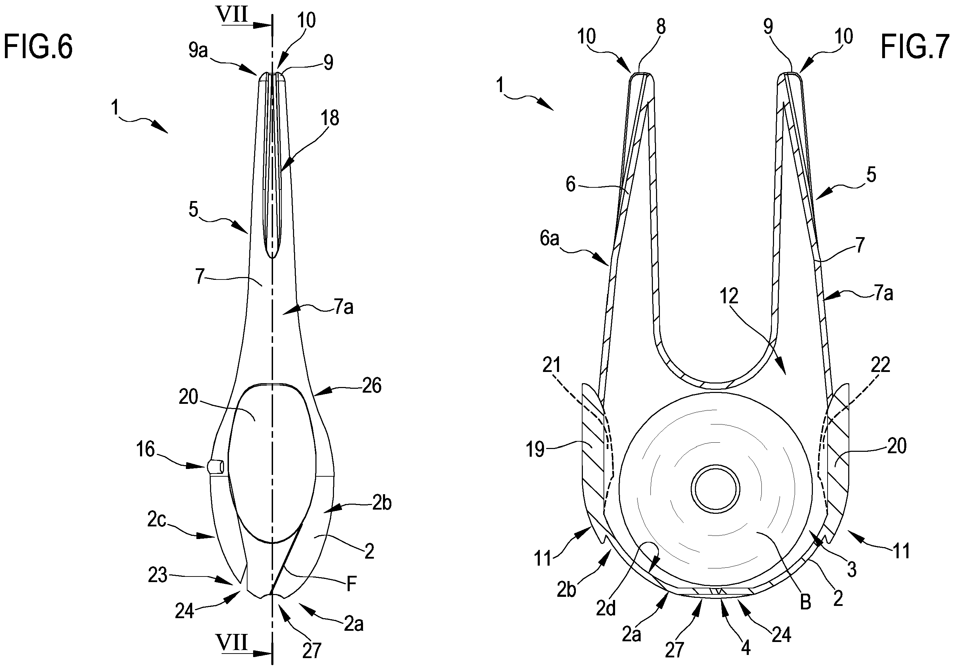

As it can be observed, the oral care tool for tensioned dental floss includes:
- a hollow handle portion 2 at the user's disposal in which a housing chamber 3 which in this case already receives a spool B of dental floss F, visible at the sections of figures 5 and 7, and an outlet 4, such as a hole or a through slot visible in figure 3, which allows the user the progressive extraction of the dental floss F from the hollow handle portion 2 by exerting on it with the hand a traction force, are defined;
- a fork 5 formed by a couple of shaped arms 6, 7 projecting upwardly from the handle portion 2, provided with respective terminal tip 8, 9 spaced apart each other by a prefixed distance (or gap) D and supporting a first progressive given length L₁ of dental floss F kept under tension, placing it in the prefixed distance D that spaces apart the terminal tips 8, 9;
- guide means, overall indicated with 10, arranged at least in the upper outer wall 8a, 9a of each of the terminal tips 8, 9 of the shaped arms 6, 7, which receive a respective second progressive given length L₂ of dental floss F;
- tensioning means, indicated as a whole with 11, associated externally with the handle portion 2, adapted to allow the user to tension at least the first given length L₁ of dental floss F in order to favour effective and correct insertion thereof between two adjacent teeth.

The hollow handle portion 2, the fork 5, the guide means 10 and the tensioning means 11 are made in one piece and monolithic each other forming a single reinforced structural body 12 obtained directly during the production phase by molding and having an at least partially box-shaped structure in a part, in particular that one which defines the hollow handle portion 2.

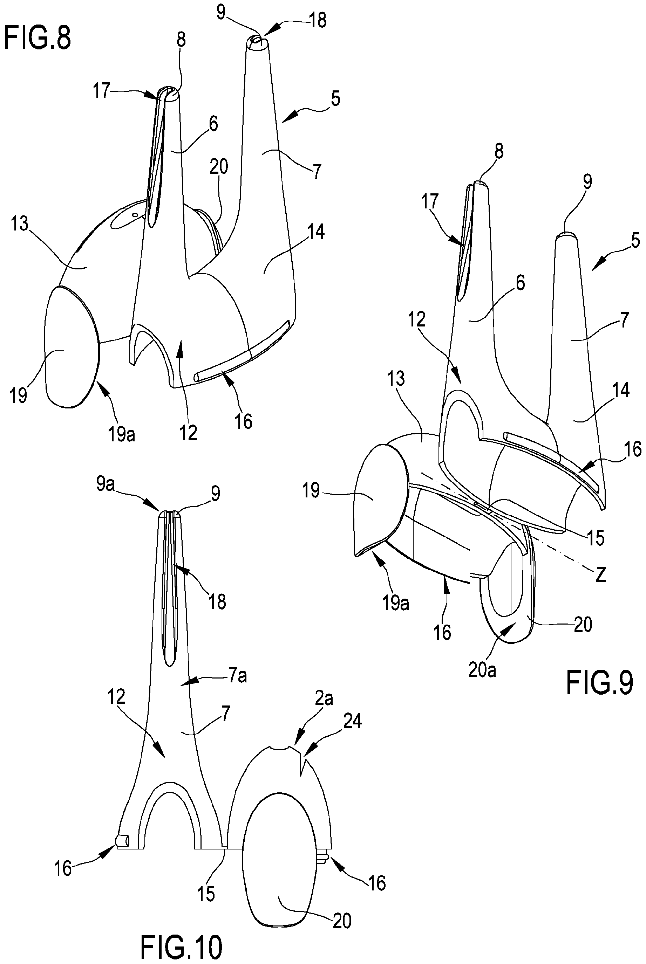

In particular, advantageous but purely preferred way, the reinforced structural body 12 includes a first box-structured portion 13 and a second box-structured portion 14 coupled each other on one side by an elastically yielding union edge 15, monolithic to the first portion 13 and the second portion 14 and defining a linear rotation axis Z suitable to allow the mutual rotation of the first portion 13 and second portion 14, and on the other side by connecting means, indicated overall with 16, monolithic to the first portion 13 and the second portion 14 and suitable to determine at least the hermetic closure of the structure which is thus, in this case, fully box-shaped of the reinforced structural body 12, as it can be well derived from figures 8-10.

More in detail, figure 10 shows that the connecting means 16 belong partly to the first portion 13 and partly to the second portion 14 of the reinforced structural body 12 in order to couple each other (for example by snap, by fitting, by dovetail) when the reinforced structural body 12 is closed to form the oral care tool 1.

In the specific case under description, according to the invention, the connecting means 16 are of the fixed type in such a way that the first portion 13 is firmly and definitively coupled with the second portion 14 and the oral care tool 1 of the invention is disposable, perfectly airtight during use: this, however, guarantees high conditions of hygiene to the user.

Figure 3 shows that advantageously the outlet port 4 (such as, as said, a through hole or slit) is made in the lower surface 2a of the hollow handle portion 2: this prevents impurities or powders of various kinds, as well as humidity or minimum amount of liquid, typically water, from inappropriately entering inside of the hollow handle portion 2 while the oral care tool 1 of the invention is used, thus preserving to the full extent the status of sterilization of the spool B of the dental floss F placed in the housing chamber 3 and gradually wound at each use.

In a preferred but not limiting manner, the side surface facing the outside 2b of the hollow handle portion 2 is convex, in this case oval: it favours the smooth rotation of 360° of the oral care tool 1 of the invention allowing to this to take several positions within the mouth of the person, the most correct and functional ones to access from time to time to the teeth to be cleaned.

Furthermore, preferably but not necessarily, the hollow handle (or grasp) portion 2 is arranged near or in the proximity of the fork 5: this constructional trick positively counts since it assures the user greater sensitivity of use of the oral care tool 1 of the invention within its mouth, with the obvious advantages of a greater accuracy of the cleaning of the teeth and of a lower risk of accidental even painful impacts of the tool 1 itself against the teeth, gums, palate and so on.

In particular, the dimensional compactness of the oral care tool 1 of the invention, resulting from the fact that the hollow handle portion 2 and the fork 5 are extremely close together and have reduced and proportionate surface extensions (i.e. without one of the two dominating the other, as it happens in the prior art), allows the user high ergonomics and precision of use of the tool 1, thanks to the fact that the hollow handle portion 2 contrasts with the palm of the hand while the fingers handle the fork 5.

Preferably but not necessarily, the guide means 10 comprise two surface grooves 17, 18, each of which made in the corresponding upper outer wall 8a, 9a respectively of the terminal tips 8, 9 of the shaped arms 6, 7.

Preferably, each of the surface grooves 17, 18 also extends to an upper portion of the corresponding side wall facing the outside 6a, 7a of the shaped arms 6, 7, as shown for example in figures 1, 4 and 6.

In further embodiments of the guide means of the oral care tool of the invention, not illustrated in the figures that follow, the surface groove could be made in upper outer wall of only one of the terminal tips of the shaped arms of the fork.

In addition, in further alternative embodiments of the guide means of oral care tool of the invention, the surface groove could also extend to an upper portion of the side wall facing the outside of only one of the shaped arms of the fork and this both in case the surface groove is made in the upper outer wall of both the terminal tips and in case the surface groove is made in the upper outer wall of only one of the terminal tips.

The extension of the surface grooves 17, 18 to the upper portion of the corresponding side wall facing the outside 6a, 7a of the shaped arms 6, 7 makes the latter themselves partly elastically yielding, able to slightly flex with elastic memory one towards the other, when the first progressive given length L₁ of dental floss F is inserted into the dental interstice between two adjacent teeth: this implies the significant advantage to loosen the tension level of the aforesaid length L₁ of dental floss F when it enters in contact with the teeth, to a minimal but significant extent to allow the dental floss F itself to embrace the teeth affected by the cleaning, with consequent improvement of the effectiveness of the oral treatment and decrease of the invasiveness of the dental floss F on the gums.

It should be observed in many of the figures cited so far that the upper outer wall 8a, 9a of the terminal tips 8, 9 of the shaped arms 6, 7 is conveniently rounded (or convex), in order to reduce the invasiveness and dangerousness of the oral care tool 1 during its use within the mouth of the user, especially to safeguard the gums with which inevitably interferes and which notoriously constitute a delicate and sensitive area even to the slightest contact. Advantageously, moreover, around the outlet port 4 the lower surface 2a of the hollow handle portion 2 presents a transverse recess 27 having the function of keeping in guide the length of dental floss F just extracted by the user through the outlet port 4.

As far as the tensioning means 11 are concerned, they comprise a pair of shaped wings 19, 20 opposite each other, projecting from the side surface facing the outside 2b of the hollow handle portion 2 from symmetrically opposed parts with respect to the symmetry axis Y of the handle portion 2 itself, and a pair of inner baffles 21, 22, at least one of which is interposed between one of the shaped wings 19, 20 and the handle portion 2 to which is monolithic and suitable to support, wrapped by the user for at least one revolution, a predetermined length to be used or already used of the dental floss F when the first progressive given length L₁ of the dental floss F is positioned in the prefixed distance D (operative situation which coincides with the condition of use or ready to the use of the oral care tool 1 of the invention).

In this way, such a predetermined length to be used of dental floss F is partially received in an interstitial space, not shown, defined between the side surface facing the outside 2b of the hollow handle portion 2b and the inner side surface 19a, 20a of at least one of the shaped wings 19, 20.

More precisely, in the specific case under description, the predetermined length to be used of dental floss F is partly wrapped around the inner baffle 21, being arranged at the shaped wing 19 that is first affected by the dental floss F extracted from the hollow handle portion 2 through the outlet port 4, and partly around the inner baffle 22, being arranged at the opposite shaped wing 20, while the length of dental floss F just used by the user to clean his own teeth is removed by cutting (obtainable in various ways, for example as it will be shortly clarified) and definitively rejected.

Dimensions in amplitude and width (for example the diameter) of each of the inner baffles 21, 22 are kept to a minimum, in the order of a few tenths of a millimeter, in such a way that the parts of the predetermined length to be used of dental floss F are spaced apart from the first progressive given length L₁ and which cooperate with the fork 5 are kept as much as possible tangent and aligned to the respective side wall facing the outside 6a, 7a of the shaped arms 6, 7.

In this way, the predetermined length to be used of dental floss F assumes a correct position that, when the oral care tool 1 for tensioned dental floss of the present invention is used, does not interfere in any way with the teeth to be cleaned and, more generally, does not hinder the user in handling the tool 1 itself and in correctly performing with it the treatment of oral care.

In other applicative embodiments of the oral care tool of the invention, however not illustrated, the length still to be used of dental floss could be wrapped for at least one revolution around only the second inner baffle concerned by the path of dental floss outside the hollow handle portion.

One of the two inner baffles 21, 22 also supports, wrapped by the user for at least one revolution, a predetermined length of dental floss F when the prefixed distance D is devoid of the first given length L₁ of dental floss F (operative situation which corresponds to the rest condition of oral care tool 1 of the invention).

It is understood that in other optional embodiments of the invention, not accompanied by reference drawings, the tensioning means could include only one shaped wing projecting from the outer side surface of the hollow handle portion, and therefore, only one inner baffle interposed between such a shaped wing and the handle portion which it is monolithic to. The colouring of the shaped wings 19, 20 might advantageously differ from oral care tool 1 to oral care tool 1 in such a way as to distinguish each other various tools 1 and thus allow, consequently, to unambiguously establish to which person of a family nucleus, where more than one of them can be used, each of them uniquely belongs.

According to the preferred embodiment described herein of the invention, the oral care tool 1 comprises cutting means, generally numbered with 23, associated in this case with the handle portion 2 and adapted to facilitate the cutting of an already used pre-established length (coinciding or less with the predetermined length to be used mentioned above) of dental floss F, for example when a new first progressive given length L₁ of dental floss F is already supported under tension at the prefixed distance D by the terminal tips 8, 9 of the shaped arms 6, 7 and also, a new predetermined length to be used of dental floss F is already clamped around the inner baffles 19, 20.

In particular, also the cutting means 23 are monolithic to the handle portion 2 so that the oral care tool 1 advantageously comprises as piece also this component.

In a preferred but not exclusive manner, as shown especially in figures 3, 4 and 6, the cutting means 23 comprise a surface notch 24 made in the outer front surface 2c of the handle portion 2 and having at least one sharp edge that allows easy cutting of the predetermined length already used of dental floss F.

In this regard, the figures just mentioned show that, in a purely indicative and not limiting title, the surface notch 24 presents in side view a profile substantially in the shape of V facing downwardly and in front view a profile that substantially recalls the mouth of a person while smiling.

In addition, the surface notch 24 is preferably made near the lower surface 2a of the hollow handle portion 2 in such a way that its access mouth 25 is facing downwardly when the oral care tool 1 is used by the person, ensuring the same advantages described above for the outlet port 4.

In other embodiments of the invention of the oral care tool, which are also not shown in the attached drawings, the cutting means can be associated with the fork instead of the handle portion, resulting in particular monolithic with the fork itself.

In addition, further alternative embodiments of the invention, again not depicted in the enclosed drawings, the cutting means could comprise one or more components, all or only some of which are totally distinct, coupled stably and in various ways with the hollow handle portion and/or the fork, resulting therefore compared with the latter not monolithic but elements remitted.

In relation to the shaped arms 6, 7, it is evident that each of them present a side wall facing the outside 6a, 7a convex and slightly tapered towards the symmetry axis Y of the fork 5, proceeding from the base portion 26 towards the terminal tips 8, 9 of each of the shaped arms 6, 7: such a constructive trick ensures a contact less invasive, more controlled and more delicate of oral care tool 1 of the invention with the parts inside the mouth of the user which inevitably it interferes with in placing the first progressive given length L₁ of dental floss between two adjacent teeth.

Furthermore, as in particular figures 2 and 4-7 well illustrate, the side walls facing the inside 6b, 7b one facing to the other of the shaped arms 6, 7 are, by purely preferred title, arranged in mutually parallel planes in such a way that the prefixed distance D remains constant along the whole vertical development of the shaped arms 6, 7.

This avoids the user to open in an disproportionate way the mouth in order to clean the interstitial spaces between the molars and/or the wisdom teeth, notoriously more difficult to be reached, as it happens instead in the oral care tools shown in the known patent documents mentioned before: thanks to the oral care tool 1 of the invention, instead, opening of the mouth of the user is almost always the same, in order to clean through the first progressive given length L₁ of dental floss F any dental interstice (be it both between the incisors and canines and between molars and wisdom teeth), so that the invention allows to avoid the risk of still always painful accidental impacts with inner parts of the mouth, such as the palate.

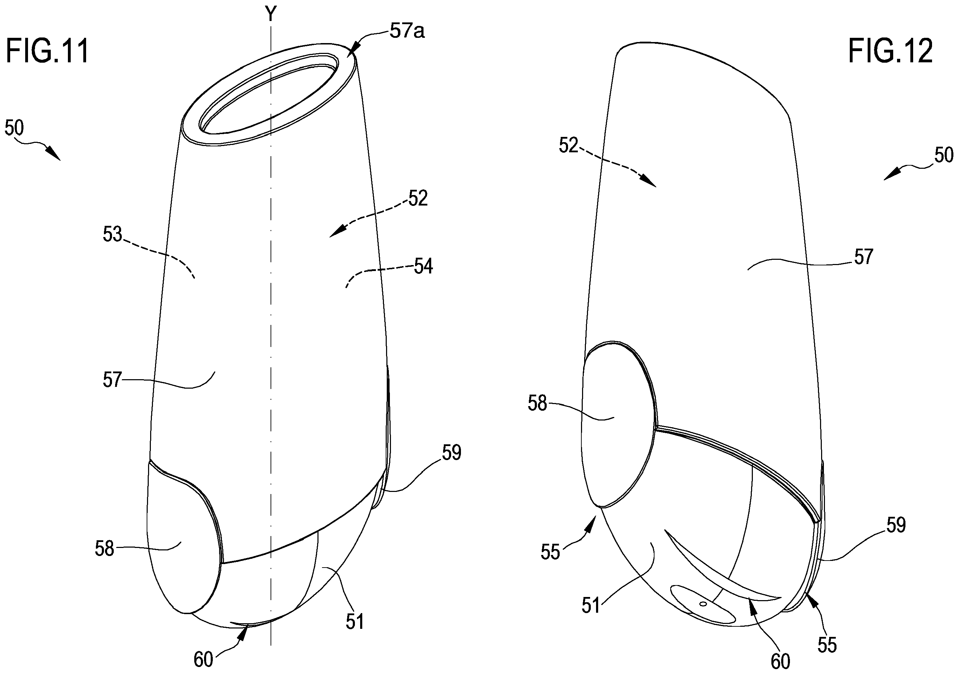

Figures 11 and 12 illustrate a first possible embodiment of the invention in which the oral care tool for tensioned dental floss, now globally numbered with 50, differs from that one just described and indicated with 1 for the fact that it also comprises a protective cap, indicated as a whole with 57, suitable to be removably coupled with the tensioning means, as a whole marked with 55, when the tool 50 itself is in non-use (or rest) conditions to be arranged covering the fork 52.

It is reiterated that, in non-use (or rest) conditions, also the oral care tool 50 takes a configuration of the type shown in figure 6 with the dental floss F wrapped around one of the inner baffles (not shown for the sake of convenience) adjacent to one of shaped wings 58, 59 and received by a length already used in the surface notch 60.

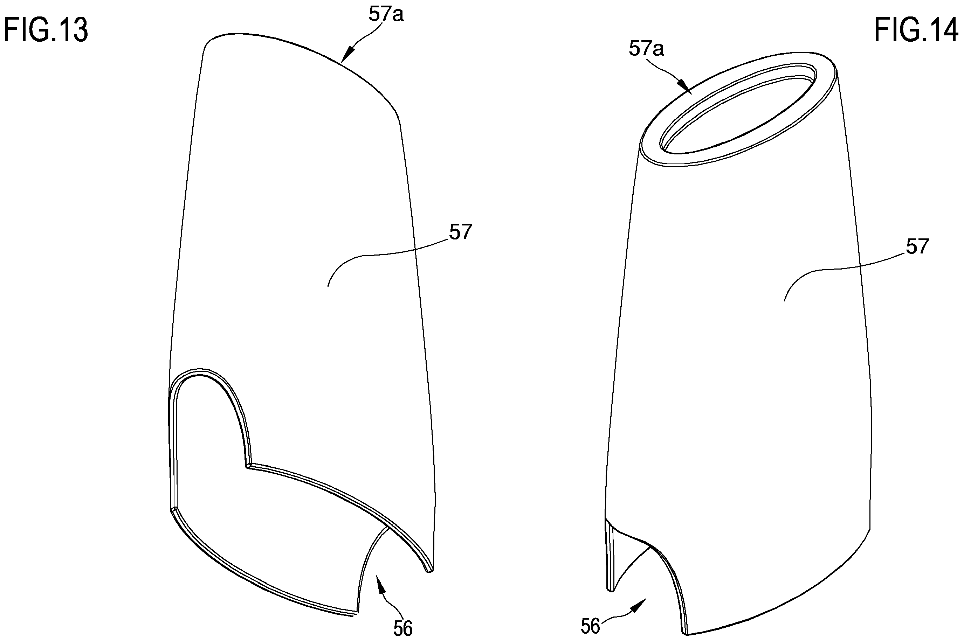

More specifically, the protective cap 57, visible apart in the subsequent figures 13 and 14, presents a flat side surface 57a, opposite to the inlet 5.6 through which the fork 52 is fitted into the protective cap 57, suitable to ease the effective and stable support of the protective cap 57 itself when the tool 50 is in use conditions, and to ease the effective and stable support of the tool 50 itself on any support structure (such as the shelf of a bathroom cabinet) when the tool 50 is in rest conditions and temporarily stored.

More specifically, when the oral care tool 50 is in rest conditions, the protection cap 57 encloses inside of it the fork 52 and is placed in such a way that its flat side surface 57a is supported on the support structure and the terminal tips of the shaped arms 53, 54 of the fork 52 itself as well as the first progressive given length L₁ are facing downwardly: this appropriately allows, if the user decides to use more times, on different occasions, a first progressive given length L₁ of dental floss F, to prevent impurities or drops of water - of which such first progressive given length L₁ is inevitably mingled due to its passages in the teeth and/or under the water during a normal use) - penetrate in the hollow handle portion 51 or are dispersed outside, for instance above the support structure, in an uncontrolled, unhygienic and unaesthetic way.

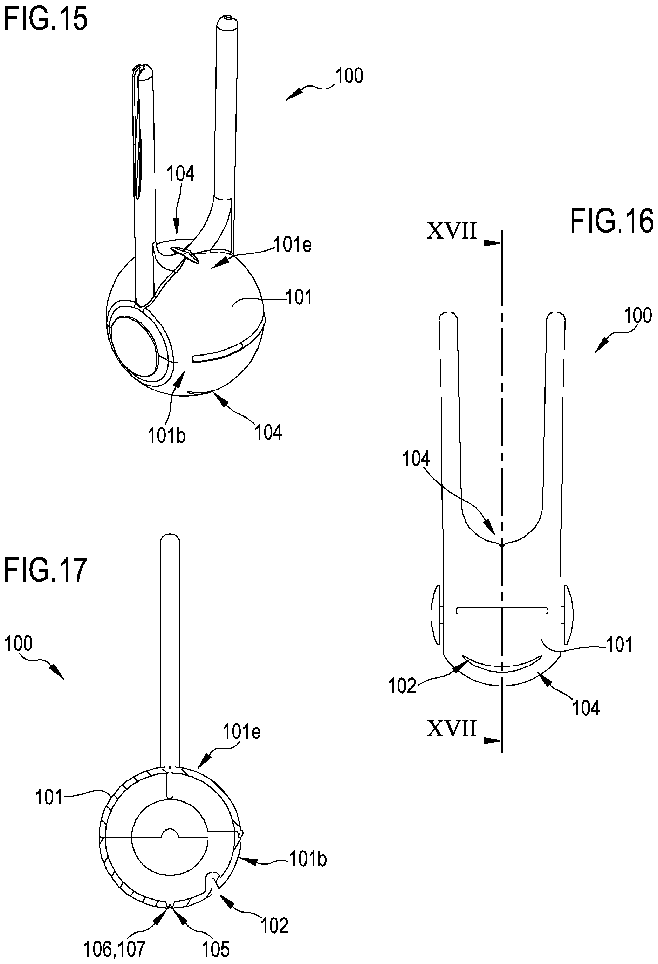

The hollow handle portion 51 suitably remains excluded from the coverage of the protective cap 57 which presents a tapered profile towards the symmetry axis Y of the fork 52 which advantageously conjugates with the profile of the shaped arms 53, 54 of the fork 52 itself. Subsequent figure 15 shows another possible embodiment of the invention in which the oral care tool for tensioned dental floss, now globally indicated with 100, differs from those ones previously described and indicated with 1 and 50 first of all for the fact that the convex shape of the side surface 101b directed toward the outside of the hollow handle portion 101 is, in this case, spherical.

A further substantial constructive difference of the oral care tool 100 of the invention compared to the previous tools 1 and 50 relates to the cutting means, indicated as a whole with 104, which, as it can be better derived from figure 16, are also arranged in the top surface 101e of the hollow handle portion 101: it follows that, after the removal of the predetermined length yet used of dental floss F, the free end of the entire length still to be used of dental floss F can remain stably bound to the top surface 101e of the hollow handle portion 101, thus facilitating the subsequent handle of such a free end by the user at the time of a new use of the oral care tool 100 of the invention.

In addition, the bottom surface 101a of the hollow handle portion 101 presents, besides the transverse recess 105, also a pair of linear cuts. 106, 107, better seen in figure 17, made from symmetrically opposite parts with respect to the symmetry axis Y of the hollow handle portion 101 starting from the transverse recess 105: these linear cuts 106, 107 improve the ability to regularly keep guided the length of dental floss F just extracted by the user through the outlet port 103 with respect to the embodiments described above.

Object of the present invention is also an oral hygiene kit comprising the oral care tool 1 for tensioned dental just described above as well as the spool B of dental floss F received within the housing chamber 3 of the hollow handle portion 2 from which the dental floss F is progressively extracted by the user, by means of a traction force, passing through the outlet port 4.

In the oral hygiene kit, the hollow handle portion 2, the fork 5, the guide means 10 and the tensioning means 11 are made in one piece and monolithic each other forming a single reinforced structural body 12 obtained directly during the production phase by molding and having an at least partly box-shaped structure in the part that defines the handle portion 2 and houses the spool B of dental floss F.

Preferably but not exclusively, the spool B of dental floss F is simply inserted into the housing chamber 3 within which is totally free, for interfering by contact with the inner side surface 2d of the hollow handle portion 2. In this way, in operating conditions, a slight friction between the spool B and the inner side surface 2d of the hollow handle portion 2 which, contrary to similar oral care tools of the prior art, allows to obtain an appropriately controlled, fractioned and slowed output of the dental floss F from the housing chamber 3 of the hollow handle portion 2 itself.

In an advantageous manner, furthermore, the spool B of dental floss F is preferably contained into a protection bag, not visible, having a through output opening that allows the progressive extraction of the dental floss F and suitable to ensure a greater preservation of the sterilization state of the dental floss F, avoiding their direct contact with the external environment especially during assembly of the oral care tool 1 of the invention where it is handled by the operator.

The dental floss F belonging to oral hygiene kit of the invention, used to remove dental plaque and food from the teeth, is of the type per se known to the person skilled in the art being constituted by a tape composed of a set of thin filaments made of nylon or plastic material (such as for example PTFE or polytetrafluoroethylene - also known under the trademark Teflon® - PE or polyethylene, PET or polyethylene terephthalate, polyester, pure natural silk, just to mention some of the main materials used).

The dental floss F, advantageously, although not necessarily, includes reference means (not visible in the figures that follow) externally applied to it and uniformly distributed along its entire length, having the function of facilitating the user in determining the correct predetermined length of dental floss F to be extracted from the housing chamber 3 of the hollow handle portion 2 and sufficient to obtain a correct and hygienic use of the oral care tool 1, thus avoiding wastage of dental floss F.

In particular, the correct predetermined length comprises the first progressive given length L₁, the second progressive given length L₂ and the predetermined length to be used wound for at least one revolution on at least one of the inner baffles 21, 22 when the first progressive given length L₁ of dental floss F is disposed in the prefixed distance D.

The reference means may comprise for example a plurality of highlighted notches equally spaced apart each other on the outer surface of the dental floss F.

In addition, still in a suitable but not binding way, the dental floss F includes, in the final stretch (for example the last meter) of its length, end of thread signaling means, not shown and comprising for example a colouring of such a finale stretch different from that one of the remaining part of the dental floss F, suitable to signal the user that the usable dental floss F is now ending.

Operatively, assuming to start from the integral package of oral care tool 1 of the invention (for example, of the "use-and-throw-away" type), in which the spool B of dental floss F is contained in a free manner within the housing chamber 3 of the hollow handle portion 2, the user extracts the predetermined length to be used of dental floss F necessary to wrap it, for at least one complete revolution, around the inner baffle 21 and around the inner baffle 22 and especially dispose its first progressive given length L₁ in the prefixed distance D that spaces apart the terminal tips 8, 9 of the shaped arms 6, 7 of the fork 5 and the second progressive given length L₂ in the surface groove 17, 18 extends in the upper outer wall 8a, 9a of the terminal tips 8, 9 and in the upper portion of the side wall facing the outside 6a, 7a of the shaped arms 6, 7.

In this way, the oral care tool 1 of the invention assumes the use condition of figures 1-5 and the first given useful length L₁ of dental floss F is placed, tensioned in the desired manner, in the prefixed distance D defined between the terminal tips 8, 9.

After the first use for the care and cleaning of his own teeth, the user positions the oral care tool 1 by placing the dental floss F as to figures 6, 7, only wrapped around the inner baffle 21 that spaces apart the shaped wing 19 from the hollow handle portion 2, and eventually covers the fork 5 with a protective cap of the type indicated with 57 in figures 11-14: thanks to the flat side surface 57a of the protective cap 57, such a constructional arrangement allows in particular the correct and stable resting of the oral care tool 1 or 50 on any support structure, such as the shelf of a piece of furniture for bathroom, when it assumes the rest condition.

In the subsequent use, the user removes the possible protective cap 57, frees the dental floss F external to the handle portion 2 from the coupling with the shaped wing 19 and with the related inner baffle 21 and, by leveraging the reference means cited above, he extracts from the hollow handle portion 2 the dental floss F for a further exact predetermined length to be used sufficient to allow the complete substitution - in the prefixed distance D between the terminal tips 8, 9 where the portion of dental floss F useful to be actuated for the hygiene of the teeth is housed - of the previous first given length L₁ already used with a new first given length L₁ of still clean, intact and sterilized dental floss F.

The end user cuts, then, through the cutting means 23 the predetermined length in excess and yet used of dental floss F and rewinds for at least one full revolution the predetermined length to be used of dental floss F both around the inner baffle 21 and around the inner baffle 22 respectively defined by the shaped wings 19 and 20 of the tensioning means 11: with these simple and quick handles, the oral care tool 1 of the invention is effectively ready for a new use.

The operations just indicated are repeated whenever the user wishes to use the oral care tool 1 of the invention, up to the exhaustion of the spool B of dental floss F: when this event happens, suitably prior warning to the user by the end of thread signaling means, such an oral care tool 1, in the disposable configuration designed for the attached figures and preferred by the applicant, is allocated to waste and disposed of, since the opening of the connecting means 16 would result in this case in their irremediable breakage and would compromise the correct subsequent use of the tool 1 itself, especially in relation to the ability to effectively keep protected the new spool of dental floss inserted into the housing chamber 3 of the hollow handle portion 2.

Based on the description just given, it is understood, therefore, that the oral care tool for tensioned dental floss object of the present invention achieves the purposes and reaches the advantages previously mentioned.

The oral care tool of the invention is extremely light, in any case lighter than equivalent oral care tools of the current state of the art, thanks to its constructive conception as obtainable by the independent claim that follows, to the at least partially box-shaped structure that distinguishes it and, preferably, to the plastic material which it is made of: thanks to this technical feature, the user gets greater sensitivity in the use of the oral care tool of the invention while carrying out an operation - cleaning of the dental interstices between tooth and tooth - perceived as invasive and provided with a certain degree of danger or risk, depending of the fact that it affects delicate and weak areas of the mouth, such as the gums.

In addition, in other embodiments of the oral care tool for tensioned dental floss herewith exclusively claimed, yet not accompanied by reference drawings, the tensioning means could be externally associated only with the fork or both with the hollow handle portion and with fork, which does not affect the advantages brought by the present invention.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Use-and-throw-away or disposable oral care tool (1; 50; 100) for tensioned dental floss comprising:
- a hollow handle portion (2; 51; 101) at the user's disposal in which a housing chamber (3), suitable to receive a spool (B) of dental floss (F) and an outlet port (4; 103) suitable to allow said user the progressive extraction of said dental floss (F) from said hollow handle portion (2; 51; 101), are defined;
- a fork (5; 52) formed by a couple of shaped arms (6, 7; 53, 54), projecting upwardly from said hollow handle portion (2; 51; 101), provided with respective terminal tips (8, 9) spaced apart each other by a prefixed distance (D) and suitable to support a first progressive given length (L₁) of said dental floss (F) kept under tension, placing it in said prefixed distance (D) spacing apart said terminal tips (8, 9);
- guide means (10), arranged at least in the upper outer wall (8a, 9a) of each of said terminal tips (8, 9) of said shaped arms (6, 7; 53, 54), suitable to receive a second progressive given length (L₂) of said dental floss (F);
- tensioning means (11; 55), associated externally with said hollow handle portion (2; 51; 101) and/or said fork (5; 52), suitable to allow to said user to tension at least said first given length (L₁) of said dental floss (F) in order to favour effective and correct insertion thereof between two adjacent teeth,
wherein said hollow handle portion (2; 51; 101), said fork (5; 52), said guide means (10) and said tensioning means (11; 55) are made in one piece and monolithic each other forming a single reinforced structural body (12) obtained directly during the production phase by molding and having an at least partially box-shaped structure in a part defining said hollow handle portion (2; 51; 101), and said reinforced structural body (12) includes a first box-structured portion (13) and a second box-structured portion (14) coupled each other on one side through an elastically yielding union edge (15), monolithic to said first portion (13) and said second portion (14) and defining a linear rotation axis suitable to allow the mutual rotation of said first portion (13) and said second portion (14), and on the other side through connecting means (16), monolithic to said first portion (13) and said second portion (14) and suitable to determine at least the hermetic closure of said at least partially box-shaped structure of said reinforced structural body (12), **characterized in that** said connecting means (16) are of the fixed type in such a way that said first portion (13) is firmly and definitively coupled with said second portion (14).

2. Tool (1; 50; 100) according to claim 1), **characterized in that** said outlet port (4; 103) is made in the lower surface (2a) of said hollow handle portion (2; 51; 101).

3. Tool (1; 50; 100) according to any of the preceding claims, **characterized in that** the side surface facing the outside (2b; 101b) of said hollow handle portion (2; 51; 101) is convex.

4. Tool (1; 50; 100) according to any of the preceding claims, **characterized in that** said hollow handle portion (2; 51; 101) is arranged near or in proximity of said fork (5; 52).

5. Tool (1; 50; 100) according to any of the preceding claims, **characterized in that** said guide means (10) comprise a surface groove (17, 18) made in said upper outer wall (8a, 9a) of at least one of said terminal tips (8, 9) of said shaped arms (6, 7; 53, 54).

6. Tool (1; 50; 100) according to claim 5), **characterized in that** said surface groove (17, 18) also extends to an upper portion of the side wall facing the outside (6a, 7a) of at least one of said shaped arms (6, 7; 53, 54).

7. Tool (1; 50; 100) according to any of the preceding claims, **characterized in that** said wall outer upper (8a, 9a) of said terminal tips (8, 9) of said shaped arms (6, 7; 53, 54) is rounded.

8. Tool (1; 50; 100) according to any of the preceding claims, **characterized in that** said tensioning means (11; 55) comprise:
- at least one shaped wing (19, 20; 58, 59) projecting from the side surface facing the outside (2b; 101b) of said handle portion (2; 51; 101);
- at least one inner baffle (21, 22) interposed between said shaped wing (19, 20; 58, 59) and said handle portion (2; 51; 101) to which is monolithic, suitable to support, wrapped for at least one revolution by said user, a predetermined length to be used of said dental floss (F) when said first progressive given length (L₁) of said dental floss (F) is positioned in said prefixed distance (D), so that said predetermined length to be used of said dental floss (F) is received in an interstitial space defined between said side surface facing the outside (2b; 101b) of said handle portion (2, 51, 101) and the inner side surface (19a, 20a) of said shaped wing (19, 20; 58, 59).

9. Tool (1; 50; 100) according to any of the preceding claims, **characterized in that** it comprises cutting means (23; 104), associated with said handle portion (2; 51; 101) and/or said fork (5; 52), suitable to facilitate the cutting of an already used pre-established length of said dental floss (F).

10. Tool (1; 50; 100) according to claim 9), **characterized in that** said cutting means (23; 104) are at least partially monolithic to said handle portion (2; 51; 101) and/or said fork (5; 52).

11. Tool (1; 50; 100) according to claim 9) or 10), **characterized in that** said cutting means (23; 104) comprise a surface notch (24; 60; 102) made in the outer front surface (2c) of said handle portion (2; 51; 101) and having at least one sharp edge suitable to allow cutting of said pre-established length of said dental floss already used (F).

12. Tool (1; 50; 100) according to claim 11), **characterized in that** said surface notch (24; 60; 102) is made near the lower surface (2a) of said handle portion (2; 51; 101) in such a way that its access mouth (25) is facing downwardly.

13. Tool (1; 50; 100) according to any of the preceding claims, **characterized in that** each of said shaped arms (6, 7; 53, 54) presents a side wall facing the outside (6a, 7a) convex and slightly tapered towards the symmetry axis (Y) of said fork (5; 52) proceeding from the base portion (26) of each of said shaped arms (6, 7; 53, 54) towards said terminal tips (8, 9) of each of said shaped arms (6, 7; 53, 54).

14. Tool (1; 50; 100) according to any of the preceding claims, **characterized in that** the side walls facing the inside (6b, 7b) one facing to the other of said shaped arms (6, 7; 53, 54) are arranged according to mutually parallel planes in such a way that said prefixed distance (D) remains constant along the whole vertical development of said shaped arms (6, 7; 53, 54).

15. Tool (50) according to any of the preceding claims, **characterized in that** it comprises a protective cap (57) suitable to be removably coupled with said tensioning means (55) when said tool (50) is in rest conditions to be arranged covering said fork (52).

16. Tool (50) according to claim 15), **characterized in that** said protective cap (57) presents a flat side surface (57a), opposite to the inlet (56) through which said fork (52) fits into said protective cap (57), suitable to ease its effective and stable support when said tool (50) is in use conditions and/or ease the effective and stable support of said tool (50) on any support structure when said tool (50) is in rest conditions and temporarily stored.

17. Oral hygiene kit consisting of:
- an use-and-throw-away or disposable oral care tool (1; 50; 100) for tensioned dental floss comprising:
• a hollow handle portion (2; 51; 101) at the users' disposal in which a housing chamber (3) and an outlet port (4; 103) are defined;
• a fork (5; 52) formed by a couple of shaped arms (6, 7; 53, 54), projecting upwardly from said hollow handle portion (2; 51; 101), provided with respective terminal tips (8, 9) spaced apart each other by a prefixed distance (D) and suitable to support a first progressive given length (L₁) of said dental floss (F) kept in tension, placing it in said prefixed distance (D) spacing apart said terminal tips (8, 9);
• guide means (10), arranged at least in the upper outer wall (8a, 9a) of each of said terminal tips (8, 9) of said shaped arms (6, 7; 53, 54), suitable to receive a second progressive given length (L₂) of said dental floss (F);
• tensioning means (11; 55), associated externally with said hollow handle portion (2; 51; 101) and/or said fork (5; 52), suitable to allow to said user to tension at least said first given length (L₁) of said dental floss (F) in order to favour effective and correct insertion thereof between two adjacent teeth;
- a spool (B) of dental floss (F) received within said housing chamber (3) of said hollow handle portion (2; 51; 101) from which said dental floss (F) is gradually extracted by said user passing through said outlet port (4; 103),
wherein said hollow handle portion (2; 51; 101), said fork (5; 52), said guide means (10) and said tensioning means (11; 55) are made in one piece and monolithic each other forming a single reinforced structural body (12) obtained directly during the production phase by molding and having an at least partially box-shaped structure in a part defining said hollow handle portion (2; 51; 101) where said spool (B) of dental floss (F) is housed, and said reinforced structural body (12) includes a first box-structured portion (13) and a second box-structured portion (14) coupled each other on one side through an elastically yielding union edge (15), monolithic to said first portion (13) and said second portion (14) and defining a linear rotation axis suitable to allow the mutual rotation of said first portion (13) and said second portion (14), and on the other side through connecting means (16), monolithic to said first portion (13) and said second portion (14) and suitable to determine at least the hermetic closure of said at least partially box-shaped structure of said reinforced structural body (12), **characterized in that** said connecting means (16) are of the fixed type in such a way that said first portion (13) is firmly and definitively coupled with said second portion (14).

18. Kit according to claim 17) **characterized in that** said spool (B) of dental floss (F) is simply inserted into said housing chamber (3) inside of which is totally free and surrounded by the inner side surface (2d) of said hollow handle portion (2; 51; 101).

19. Kit according to claim 17) or 18) **characterized in that** said spool (B) of dental floss (F) is contained into a protection bag having a through output opening and suitable to ensure greater preservation of the sterilization state of said dental floss (F).

## Patentansprüche

1. Gebrauchs- und Wegwerf- oder Einweg-Mundpflegewerkzeug (1; 50; 100) für gespannte Zahnseide, umfassend:
- einen hohlen Griffabschnitt (2; 51; 101), der dem Benutzer zur Verfügung steht, in dem eine Gehäusekammer (3), die zur Aufnahme einer Spule (B) von Zahnseide (F) geeignet ist, und eine Auslassöffnung (4; 103), die geeignet ist, dem Benutzer das fortschreitende Herausziehen der Zahnseide (F) aus dem hohlen Griffabschnitt (2; 51; 101) zu ermöglichen, definiert sind,
- eine Gabel (5; 52), die durch ein Paar geformter Arme (6, 7; 53, 54) gebildet wird, die von dem hohlen Griffabschnitt (2; 51; 101) nach oben vorstehen, die mit entsprechenden Anschlussspitzen (8, 9) versehen sind, die durch einen vorher festgelegten Abstand (D) voneinander beabstandet sind und geeignet sind, eine unter Spannung gehaltene erste fortschreitende vorher festgelegte Länge (L₁) der Zahnseide (F) zu tragen, und sie in den vorher festgelegten Abstand (D) zu platzieren, der die Anschlussspitzen (8, 9) trennt,
- Führungsmittel (10), die zumindest in der oberen Außenwand (8a, 9a) jeder der Anschlussspitzen (8, 9) an den geformten Armen (6, 7; 53, 54) angeordnet sind und geeignet sind, eine zweite fortschreitende vorgegebene Länge (L₂) der Zahnseide (F) aufzunehmen,
- Spannmittel (11; 55), die außen dem hohlen Griffabschnitt (2; 51; 101) und/oder der Gabel (5; 52) zugeordnet sind und geeignet sind, dem Benutzer zu ermöglichen, mindestens die erste vorgegebene Länge (L₁) der Zahnseide (F) zu spannen, um die wirksame und korrekte Einführung davon zwischen zwei benachbarten Zähnen zu begünstigen,
wobei der hohle Griffabschnitt (2; 51; 101), die Gabel (5; 52), das Führungsmittel (10) und die Spannmittel (11; 55) einteilig und monolithisch miteinander hergestellt sind und einen einzelnen verstärkten Strukturkörper (12) bilden, der direkt während der Produktionsphase durch Formverfahren gewonnen wird und eine zumindest teilweise kastenförmige Struktur in einem Teil aufweist, der den hohlen Griffabschnitt (2; 51; 101) definiert, und der verstärkte Strukturkörper (12) einen ersten kastenstrukturierten Abschnitt (13) und einen zweiten kastenstrukturierten Abschnitt (14) beinhaltet, die miteinander an einer Seite durch eine elastisch nachgebende Verbindungskante (15) gekoppelt sind, die mit dem ersten Abschnitt (13) und den zweiten Abschnitt (14) monolithisch ist und eine lineare Drehachse definiert, die geeignet ist, die gegenseitige Drehung des ersten Abschnitts (13) und des zweiten Abschnitts (14) zuzulassen, und auf der anderen Seite durch Verbindungsmittel (16), die mit dem ersten Abschnitt (13) und dem zweiten Abschnitt (14) monolithisch sind und geeignet sind, mindestens den hermetischen Verschluss der mindestens teilweise kastenförmigen Struktur des verstärkten Strukturkörpers (12) zu bestimmen, **dadurch gekennzeichnet, dass** die Verbindungsmittel (16) vom festen Typ sind, so dass der erste Abschnitt (13) mit dem zweiten Abschnitt (14) fest und endgültig verbunden ist.

2. Werkzeug (1; 50; 100) nach Anspruch 1, **dadurch gekennzeichnet, dass** die Auslassöffnung (4; 103) in der Unterseite (2a) des hohlen Griffabschnitts (2; 51; 101) ausgebildet ist.

3. Werkzeug (1; 50; 100) nach einem der vorhergehenden Ansprüche, **dadurch gekennzeichnet, dass** die der Außenseite (2b; 101b) des hohlen Griffabschnitts (2; 51; 101) zugewandte Seitenfläche konvex ist.

4. Werkzeug (1; 50; 100) nach einem der vorhergehenden Ansprüche, **dadurch gekennzeichnet, dass** der hohle Griffabschnitt (2; 51; 101) nahe oder in der Nähe der Gabel (5; 52) angeordnet ist.

5. Werkzeug (1; 50; 100) nach einem der vorhergehenden Ansprüche, **dadurch gekennzeichnet, dass** die Führungsmittel (10) eine Oberflächennut (17, 18) umfassen, die in der oberen Außenwand (8a, 9a) von mindestens einer der Anschlussspitzen (8, 9) der geformten Arme (6, 7; 53, 54) ausgebildet ist.

6. Werkzeug (1; 50; 100) nach Anspruch 5, **dadurch gekennzeichnet, dass** sich die Oberflächennut (17, 18) auch zu einem oberen Abschnitt der Seitenwand erstreckt, der der Außenseite (6a, 7a) mindestens eines der geformten Arme (6, 7; 53, 54) zugewandt ist.

7. Werkzeug (1; 50; 100) nach einem der vorhergehenden Ansprüche, **dadurch gekennzeichnet, dass** die obere Außenwand (8a, 9a) der Anschlussspitzen (8, 9) der geformten Arme (6, 7; 53, 54) abgerundet ist.

8. Werkzeug (1; 50; 100) nach einem der vorhergehenden Ansprüche, **dadurch gekennzeichnet, dass** die Spannmittel (11; 55) Folgendes umfassen:
- mindestens einen geformten Flügel (19, 20; 58, 59), der von der der Außenseite (2b; 101b) des Griffabschnitts (2; 51; 101) zugewandten Seitenfläche herausragt,
- mindestens eine innere Umlenkung (21, 22), zwischengeschaltet zwischen dem geformten Flügel (19, 20; 58, 59) und dem Griffabschnitt (2; 51; 101), mit dem sie monolithisch ist, geeignet zum Tragen einer von dem Benutzer um mindestens eine Umdrehung gewickelten zu verwendenden vorbestimmten Länge der Zahnseide (F), sobald die erste fortschreitende gegebene Länge (L₁) der Zahnseide (F) in dem vorher festgelegten Abstand (D) positioniert ist, so dass die vorbestimmte zu verwendende Länge der Zahnseide (F) in einen zwischen der der Außenfläche (2b; 101b) des Griffabschnitts (2, 51, 101) zugewandten Seitenfläche und der inneren Seitenfläche (19a, 20a) des geformten Flügels (19, 20; 58, 59) definierten Zwischenraum aufgenommen wird.

9. Werkzeug (1; 50; 100) nach einem der vorhergehenden Ansprüche, **dadurch gekennzeichnet, dass** es Schneidemittel (23; 104) umfasst, die dem Griffabschnitt (2; 51; 101) und/oder der Gabel (5; 52) zugeordnet sind und geeignet sind, das Schneiden einer bereits verwendeten, vorher festgelegten Länge der Zahnseide (F) zu erleichtern.

10. Werkzeug (1; 50; 100) nach Anspruch 9, **dadurch gekennzeichnet, dass** die Schneidemittel (23; 104) zumindest teilweise monolithisch mit dem Griffabschnitt (2; 51; 101) und/oder der Gabel (5; 52) sind.

11. Werkzeug (1; 50; 100) nach Anspruch 9 oder 10, **dadurch gekennzeichnet, dass** die Schneidemittel (23; 104) eine Oberflächenkerbe (24; 60; 102) aufweisen, die in der äußeren Vorderfläche (2c) des Griffabschnitts (2; 51; 101) ausgebildet ist und mindestens eine scharfe Kante aufweist, die geeignet ist, das Schneiden der vorher festgelegten Länge der bereits verwendeten Zahnseide (F) zu ermöglichen.

12. Werkzeug (1; 50; 100) nach Anspruch 11, **dadurch gekennzeichnet, dass** die Oberflächenkerbe (24; 60; 102) nahe der unteren Oberfläche (2a) des Griffabschnitts (2; 51; 101) so ausgebildet ist, dass ihre Zugangsöffnung (25) nach unten gerichtet ist.

13. Werkzeug (1; 50; 100) nach einem der vorhergehenden Ansprüche, **dadurch gekennzeichnet, dass** jeder der geformten Arme (6, 7; 53, 54) eine Seitenwand aufweist, die der Außenseite (6a, 7a) zugewandt, konvex und leicht verjüngt zur Symmetrieachse (Y) der Gabel (5; 52) verläuft, ausgehend vom Basisabschnitt (26) jedes der geformten Arme (6, 7; 53, 54) zu den Endspitzen (8, 9) jedes der geformten Arme (6, 7; 53, 54).

14. Werkzeug (1; 50; 100) nach einem der vorhergehenden Ansprüche, **dadurch gekennzeichnet, dass** die der Innenseite (6b, 7b) zugewandten Seitenwände, die eine der anderen der geformten Arme (6, 7; 53, 54) zugewandt sind, nach zueinander parallelen Ebenen so angeordnet sind, dass der vorher festgelegte Abstand (D) entlang der gesamten vertikalen Entwicklung der geformten Arme (6, 7; 53, 54) konstant bleibt.

15. Werkzeug (50) nach einem der vorhergehenden Ansprüche, **dadurch gekennzeichnet, dass** es eine Schutzkappe (57) umfasst, die geeignet ist, abnehmbar mit den Spannmitteln (55) gekoppelt zu werden, wenn sich das Werkzeug (50) in Ruhezuständen befindet, um angeordnet zu sein, die Gabel (52) zu bedecken.

16. Werkzeug (50) nach Anspruch 15, **dadurch gekennzeichnet, dass** die Schutzkappe (57) gegenüber dem Einlass (56), durch den die Gabel (52) in die Schutzkappe (57) passt, eine flache Seitenfläche (57a) aufweist, die geeignet ist, ihre wirksame und stabile Unterstützung zu gewährleisten, wenn das Werkzeug (50) in Gebrauchszuständen ist, und/oder die wirksame und stabile Unterstützung des Werkzeugs (50) auf jeder Trägerstruktur zu mildern, wenn sich das Werkzeug (50) in Ruhezuständen befindet und zwischengelagert ist.

17. Mundhygiene-Kit, bestehend aus:
- einem Gebrauchs- und Wegwerf- oder Einweg-Mundpflegewerkzeug (1; 50; 100) für gespannte Zahnseide, umfassend:
• einen hohlen Griffabschnitt (2; 51; 101), der den Benutzern zur Verfügung steht, in dem eine Gehäusekammer (3) und eine Auslassöffnung (4; 103) definiert sind,
• eine Gabel (5; 52), die durch ein Paar geformter Arme (6, 7; 53, 54) gebildet wird, die von dem hohlen Griffabschnitt (2; 51; 101) nach oben vorstehen, versehen mit entsprechenden Anschlussspitzen (8, 9), die durch einen vorher festgelegten Abstand (D) voneinander beabstandet sind und geeignet sind, eine unter Spannung gehaltene erste fortschreitende vorher festgelegte Länge (L₁) der Zahnseide (F) zu tragen, und sie in den vorher festgelegten Abstand (D) zu platzieren, der die Anschlussspitzen (8, 9) trennt,
• Führungsmittel (10), die zumindest in der oberen Außenwand (8a, 9a) jeder der Anschlussspitzen (8, 9) der geformten Arme (6, 7; 53, 54) angeordnet sind und geeignet sind, eine zweite fortschreitende vorgegebene Länge (L₂) der Zahnseide (F) aufzunehmen,
• Spannmittel (11; 55), die außen dem hohlen Griffabschnitt (2; 51; 101) und/oder der Gabel (5; 52) zugeordnet sind und geeignet sind, dem Benutzer zu ermöglichen, mindestens die erste vorgegebene Länge (L₁) der Zahnseide (F) zu spannen, um die wirksame und korrekte Einführung davon zwischen zwei benachbarten Zähnen zu begünstigen,
- eine Spule (B) von Zahnseide (F), die in der Gehäusekammer (3) des hohlen Griffabschnitts (2; 51; 101) aufgenommen ist, aus der die Zahnseide (F) allmählich von dem Benutzer herausgezogen wird und die Auslassöffnung (4; 103) passiert,
wobei der hohle Griffabschnitt (2; 51; 101), die Gabel (5; 52), das Führungsmittel (10) und die Spannmittel (11; 55) einteilig und monolithisch miteinander hergestellt sind und einen einzelnen verstärkten Strukturkörper (12) bilden, der direkt während der Produktionsphase durch Formverfahren gewonnen wird und eine zumindest teilweise kastenförmige Struktur in einem Teil aufweist, der den hohlen Griffabschnitt (2; 51; 101) definiert, wo die Spule (B) von Zahnseide (F) untergebracht ist, und der verstärkte Strukturkörper (12) einen ersten kastenstrukturierten Abschnitt (13) und einen zweiten kastenstrukturierten Abschnitt (14) beinhaltet, die miteinander an einer Seite durch eine elastisch nachgebende Verbindungskante (15) gekoppelt sind, die mit dem ersten Abschnitt (13) und dem zweiten Abschnitt (14) monolithisch ist und eine lineare Drehachse definiert, die geeignet ist, die gegenseitige Drehung des ersten Abschnitts (13) und des zweiten Abschnitts (14) zuzulassen, und auf der anderen Seite durch Verbindungsmittel (16), die mit dem ersten Abschnitt (13) und dem zweiten Abschnitt (14) monolithisch sind und geeignet sind, mindestens den hermetischen Verschluss der mindestens teilweise kastenförmigen Struktur des verstärkten Strukturkörpers (12) zu bestimmen, **dadurch gekennzeichnet, dass** die Verbindungsmittel (16) vom festen Typ sind, so dass der erste Abschnitt (13) mit dem zweiten Abschnitt (14) fest und endgültig verbunden ist.

18. Kit nach Anspruch 17, **dadurch gekennzeichnet, dass** die Spule (B) von Zahnseide (F) einfach in die Gehäusekammer (3) eingesetzt wird, in der sie völlig frei und von der inneren Seitenfläche (2d) des hohlen Griffabschnitts (2; 51; 101) umgeben ist.

19. Kit nach Anspruch 17 oder 18, **dadurch gekennzeichnet, dass** die Spule (B) von Zahnseide (F) in einem Schutzbeutel mit einer durchgehenden Ausgangsöffnung enthalten ist und geeignet ist, eine größere Erhaltung des Sterilisationszustandes der Zahnseide (F) zu gewährleisten.

## Revendications

1. Outil de soins bucco-dentaires à utiliser et jeter ou jetable (1 ; 50 ; 100) pour fil dentaire tendu, comprenant :
- une portion de poignée creuse (2 ; 51 ; 101) à la disposition de l'utilisateur, dans laquelle sont définis une chambre de logement (3), adaptée pour recevoir une bobine (B) de fil dentaire (F) et un orifice de sortie (4 ; 103) adapté pour permettre audit utilisateur l'extraction progressive dudit fil dentaire (F) à partir de ladite portion de poignée creuse (2 ; 51 ; 101) ;
- une fourche (5 ; 52) formée par une paire de bras profilés (6, 7 ; 53, 54), faisant saillie vers le haut à partir de ladite portion de poignée creuse (2 ; 51 ; 101), munis de pointes terminales respectives (8, 9) espacées l'une de l'autre d'une distance préfixée (D) et adaptées pour supporter une première longueur donnée progressive (L₁) dudit fil dentaire (F) maintenu en tension, en le plaçant dans ladite distance préfixée (D) espaçant lesdites pointes terminales (8, 9) ;
- des moyens de guidage (10), agencés au moins dans la paroi extérieure supérieure (8a, 9a) de chacune desdites pointes terminales (8, 9) au niveau desdits bras profilés (6, 7 ; 53, 54), adaptés pour recevoir une deuxième longueur donnée progressive (L₂) dudit fil dentaire (F) ;
- des moyens de tension (11 ; 55), associés extérieurement à ladite portion de poignée creuse (2 ; 51 ; 101) et/ou ladite fourche (5 ; 52), adaptés pour permettre audit utilisateur de tendre au moins ladite première longueur donnée (L₁) dudit fil dentaire (F) de manière à favoriser une insertion efficace et correcte de celui-ci entre deux dents adjacentes,
dans lequel ladite portion de poignée creuse (2 ; 51 ; 101), ladite fourche (5 ; 52), lesdits moyens de guidage (10) et lesdits moyens de tension (11 ; 55) sont réalisés d'une seul pièce et monolithique entre eux en formant un unique corps structurel renforcé (12) obtenu directement durant la phase de production par moulage et ayant une structure au moins partiellement en forme de boîte dans une partie définissant ladite portion de poignée creuse (2 ; 51 ; 101), et ledit corps structurel renforcé (12) inclut une première portion structurée en forme de boîte (13) et une deuxième portion structurée en forme de boîte (14) couplées l'une à l'autre sur un côté au moyen d'un bord d'union se déformant élastiquement (15), monolithique avec ladite première portion (13) et ladite deuxième portion (14) et définissant un axe de rotation linéaire adapté pour permettre la rotation mutuelle de ladite première portion (13) et ladite deuxième portion (14), et sur l'autre côté au moyen de moyens de connexion (16), monolithiques avec ladite première portion (13) et ladite deuxième portion (14) et adaptés pour entraîner au moins la fermeture hermétique de ladite structure au moins partiellement en forme de boîte dudit corps structurel renforcé (12), **caractérisé en ce que** lesdits moyens de connexion (16) sont du type fixe de telle manière que ladite première portion (13) soit couplée fermement et définitivement à ladite deuxième portion (14).

2. Outil (1 ; 50 ; 100) selon la revendication 1, **caractérisé en ce que** ledit orifice de sortie (4 ; 103) est réalisé dans la surface inférieure (2a) de ladite portion de poignée creuse (2 ; 51 ; 101).

3. Outil (1 ; 50 ; 100) selon l'une quelconque des revendications précédentes, **caractérisé en ce que** la surface latérale orientée vers l'extérieur (2b ; 101b) de ladite portion de poignée creuse (2 ; 51 ; 101) est convexe.

4. Outil (1 ; 50 ; 100) selon l'une quelconque des revendications précédentes, **caractérisé en ce que** ladite portion de poignée creuse (2 ; 51 ; 101) est agencée près ou à proximité de ladite fourche (5 ; 52).

5. Outil (1 ; 50 ; 100) selon l'une quelconque des revendications précédentes, **caractérisé en ce que** lesdits moyens de guidage (10) comprennent une rainure de surface (17, 18) réalisée dans ladite paroi extérieure supérieure (8a, 9a) d'au moins une desdites pointes terminales (8, 9) desdits bras profilés (6, 7 ; 53, 54).

6. Outil (1 ; 50 ; 100) selon la revendication 5, **caractérisé en ce que** ladite rainure de surface (17, 18) s'étend également à une portion supérieure de la paroi latérale orientée vers l'extérieur (6a, 7a) d'au moins un desdits bras profilés (6, 7 ; 53, 54).

7. Outil (1 ; 50 ; 100) selon l'une quelconque des revendications précédentes, **caractérisé en ce que** ladite paroi extérieure supérieure (8a, 9a) desdites pointes terminales (8, 9) desdits bras profilés (6, 7 ; 53, 54) est arrondie.

8. Outil (1 ; 50 ; 100) selon l'une quelconque des revendications précédentes, **caractérisé en ce que** lesdits moyens de tension (11 ; 55) comprennent :
- au moins une aile profilée (19, 20 ; 58, 59) faisant saillie à partir de la surface latérale orientée vers l'extérieur (2b ; 101b) de ladite portion de poignée (2 ; 51 ; 101) ;
- au moins un déflecteur intérieur (21, 22) interposé entre ladite aile profilée (19, 20 ; 58, 59) et ladite portion de poignée (2 ; 51 ; 101) avec lequel est monolithique, adaptée pour supporter, enroulée sur au moins un tour par ledit utilisateur, une longueur prédéterminée à utiliser dudit fil dentaire (F) quand ladite première longueur donnée progressive (L₁) dudit fil dentaire (F) est positionnée dans ladite distance préfixée (D), de manière que ladite longueur prédéterminée à utiliser dudit fil dentaire (F) est reçue dans un espace interstitiel défini entre ladite surface latérale orientée vers l'extérieur (2b ; 101b) de ladite portion de poignée (2, 51, 101) et la surface latérale intérieure (19a, 20a) de ladite aile profilée (19, 20 ; 58, 59).

9. Outil (1 ; 50 ; 100) selon l'une quelconque des revendications précédentes, **caractérisé en ce qu'**il comprend des moyens de coupe (23 ; 104), associés à ladite portion de poignée (2 ; 51 ; 101) et/ou ladite fourche (5 ; 52), adaptés pour faciliter la coupe d'une longueur préétablie déjà utilisée dudit fil dentaire (F).

10. Outil (1 ; 50 ; 100) selon la revendication 9, **caractérisé en ce que** lesdits moyens de coupe (23 ; 104) sont au moins partiellement monolithiques avec ladite portion de poignée (2 ; 51 ; 101) et/ou ladite fourche (5 ; 52).

11. Outil (1 ; 50 ; 100) selon la revendication 9 or 10, **caractérisé en ce que** lesdits moyens de coupe (23 ; 104) comprennent une encoche de surface (24 ; 60 ; 102) réalisée dans la surface avant extérieure (2c) de ladite portion de poignée (2 ; 51 ; 101) et ayant au moins une arête vive adaptée pour permettre la coupe de ladite longueur préétablie déjà utilisée dudit fil dentaire (F).

12. Outil (1 ; 50 ; 100) selon la revendication 11, **caractérisé en ce que** ladite encoche de surface (24 ; 60 ; 102) est réalisée près de la surface inférieure (2a) de ladite portion de poignée (2 ; 51 ; 101) de telle manière que son embouchure d'accès (25) soit orientée vers le bas.

13. Outil (1 ; 50 ; 100) selon l'une quelconque des revendications précédentes, **caractérisé en ce que** chacun desdits bras profilés (6, 7 ; 53, 54) présente une paroi latérale orientée vers l'extérieur (6a, 7a) convexe et légèrement effilée vers l'axe de symétrie (Y) de ladite fourche (5 ; 52) en allant de la portion de base (26) de chacun desdits bras profilés (6, 7 ; 53, 54) vers lesdites pointes terminales (8, 9) de chacun desdits bras profilés (6, 7 ; 53, 54).

14. Outil (1 ; 50 ; 100) selon l'une quelconque des revendications précédentes, **caractérisé en ce que** les parois latérales orientées vers l'intérieur (6b, 7b), l'une en face de l'autre, desdits bras profilés (6, 7 ; 53, 54) sont agencées suivant des plans mutuellement parallèles de telle manière que ladite distance préfixée (D) reste constante le long de tout le développement vertical desdits bras profilés (6, 7 ; 53, 54).

15. Outil (50) selon l'une quelconque des revendications précédentes, **caractérisé en ce qu'**il comprend un capuchon protecteur (57) adapté pour être couplé de manière amovible auxdits moyens de tension (55) quand ledit outil (50) est dans des conditions de repos pour être agencé en recouvrant ladite fourche (52).

16. Outil (50) selon la revendication 15, **caractérisé en ce que** ledit capuchon protecteur (57) présente une surface latérale plate (57a), opposée à l'entrée (56) à travers laquelle ladite fourche (52) s'ajuste dans ledit capuchon protecteur (57), adaptée pour faciliter son support efficace et stable quand ledit outil (50) est en conditions d'utilisation et/ou faciliter le support efficace et stable dudit outil (50) sur n'importe quelle structure de support quand ledit outil (50) est dans des conditions de repos et temporairement rangé.

17. Kit d'hygiène bucco-dentaire comprenant :
- un outil de soins bucco-dentaires à utiliser et jeter ou jetable (1 ; 50 ; 100) pour fil dentaire tendu comprenant :
• une portion de poignée creuse (2 ; 51 ; 101) à la disposition de l'utilisateur, dans laquelle sont définis une chambre de logement (3) et un orifice de sortie (4 ; 103) ;
• une fourche (5 ; 52) formée par une paire de bras profilés (6, 7 ; 53, 54), faisant saillie vers le haut à partir de ladite portion de poignée creuse (2 ; 51 ; 101), munis de pointes terminales respectives (8, 9) espacées l'une de l'autre d'une distance préfixée (D) et adaptées pour supporter une première longueur donnée progressive (L₁) dudit fil dentaire (F) maintenu en tension, en le plaçant dans ladite distance préfixée (D) espaçant lesdites pointes terminales (8, 9) ;
• des moyens de guidage (10), agencés au moins dans la paroi extérieure supérieure (8a, 9a) de chacune desdites pointes terminales (8, 9) au niveau desdits bras profilés (6, 7 ; 53, 54), adaptés pour recevoir une deuxième longueur donnée progressive (L₂) dudit fil dentaire (F) ;
• des moyens de tension (11 ; 55), associés extérieurement à ladite portion de poignée creuse (2 ; 51 ; 101) et/ou ladite fourche (5 ; 52), adaptés pour permettre audit utilisateur de tendre au moins ladite première longueur donnée (L₁) dudit fil dentaire (F) de manière à favoriser une insertion efficace et correcte de celui-ci entre deux dents adjacentes ;
- une bobine (B) de fil dentaire (F) reçue dans ladite chambre de logement (3) de ladite portion de poignée creuse (2 ; 51 ; 101) à partir de laquelle ledit fil dentaire (F) est progressivement extrait par ledit utilisateur en passant à travers ledit orifice de sortie (4 ; 103),
dans lequel ladite portion de poignée creuse (2 ; 51 ; 101), ladite fourche (5 ; 52), lesdits moyens de guidage (10) et lesdits moyens de tension (11 ; 55) sont réalisés d'une seul pièce et monolithique entre eux en formant un unique corps structurel renforcé (12) obtenu directement durant la phase de production par moulage et ayant une structure au moins partiellement en forme de boîte dans une partie définissant ladite portion de poignée creuse (2 ; 51 ; 101) où ladite bobine (B) de fil dentaire (F) est logée, et ledit corps structurel renforcé (12) inclut une première portion structurée en forme de boîte (13) et une deuxième portion structurée en forme de boîte (14) couplées l'une à l'autre sur un côté au moyen d'un bord d'union se déformant élastiquement (15), monolithique avec ladite première portion (13) et ladite deuxième portion (14) et définissant un axe de rotation linéaire adapté pour permettre la rotation mutuelle de ladite première portion (13) et ladite deuxième portion (14), et sur l'autre côté au moyen de moyens de connexion (16), monolithiques avec ladite première portion (13) et ladite deuxième portion (14) et adaptés pour entraîner au moins la fermeture hermétique de ladite structure au moins partiellement en forme de boîte dudit corps structurel renforcé (12), **caractérisé en ce que** lesdits moyens de connexion (16) sont du type fixe de telle manière que ladite première portion (13) soit couplée fermement et définitivement à ladite deuxième portion (14).

18. Kit selon la revendication 17, **caractérisé en ce que** ladite bobine (B) de fil dentaire (F) est simplement insérée dans ladite chambre de logement (3) à l'intérieure de laquelle elle est totalement libre et entourée par la surface latérale intérieure (2d) de ladite portion de poignée creuse (2 ; 51 ; 101).

19. Kit selon la revendication 17 ou 18, **caractérisé en ce que** ladite bobine (B) de fil dentaire (F) est contenue dans un sachet de protection ayant une ouverture de sortie et adapté pour garantir une plus grande préservation de l'état de stérilisation dudit fil dentaire (F).
